# EUROPEAN PATENT APPLICATION

(11) **EP 4 209 467 A1**
(43) Date of publication of application: **12.07.2023**
(21) Application number: 21864162.9
(22) Date of filing: 23.08.2021
(51) Int. Cl.: C03C 10/14, C03C 21/00

(54) **CRYSTALLIZED GLASS AND REINFORCED CRYSTALLIZED GLASS**

(30) Priority: 04.09.2020 JP 2020149054
(71) Applicant: Ohara, Inc., Sagamihara-shi, Kanagawa 252-5286 (JP)
(72) Inventor: KIKKAWA, Saya, Sagamihara-Shi Kanagawa 252-5286 (JP); OGASAWARA, Kohei, Sagamihara-Shi Kanagawa 252-5286 (JP); YAGI, Toshitaka, Sagamihara-Shi Kanagawa 252-5286 (JP)
(74) Representative: SSM Sandmair
(86) International application number: PCT/JP2021/030788
(87) International publication number: WO 2022/050104

(57) **Abstract**

Provided are crystallized glass that is easy to process and in which a high compressive stress value can be obtained on a surface, and reinforced crystallized glass thereof.

A crystallized glass containing at least one type selected from α-cristobalite and an α-cristobalite solid solution as a main crystal phase, in which, by mass% in terms of oxide, a content of a SiO₂ component is 50.0% to 75.0%, a content of a Li₂O component is 3.0% to 10.0%, a content of an Al₂O₃ component is 5.0% or more and less than 15.0%, and a content of a B₂O₃ component is more than 0% and 10.0% or less.

## Description

### FIELD OF THE DISCLOSURE

The present disclosure relates to crystallized glass and reinforced crystallized glass.

### BACKGROUND OF THE DISCLOSURE

It is expected that various types of glasses will be used as a cover glass for protecting a display or a housing of a portable electronic device such as a smartphone or a tablet PC, a protector for protecting a lens of an in-vehicle optical device, an interior bezel, a console panel, a touch panel material, a smart key, and the like. These devices are required to be used in harsh environments, and there is an increasing demand for glass having higher strength.

Crystallized glass is a type of glass having increased strength. The crystallized glass is obtained by precipitating crystals inside of the glass, and is known to have a superior mechanical strength to amorphous glass.

A known method for increasing the strength of glass includes chemical strengthening. An alkaline component existing in a surface layer of glass is subjected to an exchange reaction with an alkaline component having a larger ionic radius to form a compressive stress layer on the surface layer. If the compressive stress layer has a high compressive stress value, the growth of cracks is suppressed and the mechanical strength can be increased.

Patent Document 1 discloses a material composition of a crystallized glass substrate for an information recording medium that can be chemically strengthened. Patent Document 1 states that an α-cristobalite-based crystallized glass described in Patent Document 1 may be chemically strengthened and may be utilized as a material substrate having high strength. However, crystallized glass for an information recording medium, of which a substrate for a hard disk is a representative example, is not intended for use in a harsh environment.

As the applications of crystallized glass are expanding, the capability of easily producing crystallized glass and processing the crystallized glass into various three-dimensional shapes is required.

### [Patent Literature]

[Patent Document 1] Japanese Unexamined Patent Application Publication No. 2008-254984

### SUMMARY OF THE DISCLOSURE

### [Technical Problem]

An object of the present disclosure is to provide crystallized glass that is easy to process and in which a high compressive stress value can be obtained on a surface, and reinforced crystallized glass thereof.

The present disclosure provides the following.

### (Configuration 1)

Crystallized glass containing at least one type selected from α-cristobalite and an α-cristobalite solid solution as a main crystal phase, in which,
by mass% in terms of oxide,
a content of a SiO₂ component is 50.0% to 75.0%,
a content of a Li₂O component is 3.0% to 10.0%,
a content of an Al₂O₃ component is 5.0% or more and less than 15.0%, and
a content of a B₂O₃ component is more than 0% and 10.0% or less.

### (Configuration 2)

The crystallized glass according to Configuration 1, in which,
by mass% in terms of oxide,
a content of a ZrO₂ component is more than 0% and 10.0% or less, and
a total content of the Al₂O₃ component and the ZrO₂ component is 10.0% or more.

### (Configuration 3)

The crystallized glass according to Configuration 1 or 2, in which,
by mass% in terms of oxide,
a content of a K₂O component is 0% to 5.0%, and
a content of a P₂O₅ component is 0% to 10.0%.

### (Configuration 4)

The crystallized glass according to any one of Configurations 1 to 3, in which,
by mass% in terms of oxide,
a content of a Na₂O component is 0% to 4.0%,
a content of a MgO component is 0% to 4.0%,
a content of a CaO component is 0% to 4.0%,
a content of a SrO component is 0% to 4.0%,
a content of a BaO component is 0% to 5.0%,
a content of a ZnO component is 0% to 10.0%, and
a content of an Sb₂O₃ component is 0% to 3.0%.

### (Configuration 5)

The crystallized glass according to any one of Configurations 1 to 4, in which,
by mass% in terms of oxide,
a content of a Nb₂O₅ component is 0% to 5.0%,
a content of a Ta₂O₅ component is 0% to 6.0%, and
a content of a TiO₂ component is 0% or more and less than 1.0%.

### (Configuration 6)

The crystallized glass according to any one of Configurations 1 to 5, having a glass transition temperature (Tg) of 610°C or lower.

### (Configuration 7)

Reinforced crystallized glass obtained by strengthening the crystallized glass according to any one of Configurations 1 to 6, the reinforced crystallized glass including a compressive stress layer on a surface.

### EFFECTS OF THE DISCLOSURE

According to the present disclosure, it is possible to provide crystallized glass that is easy to process and in which a high compressive stress value can be obtained on a surface, and reinforced crystallized glass thereof.

The crystallized glass and the reinforced crystallized glass according to the present disclosure may be used for a protective member and the like of a device by taking advantage of a feature of the crystallized glass of being a glass material having high strength and workability. The crystallized glass and the reinforced crystallized glass according to the present disclosure may be utilized as a cover glass or a housing of a smartphone, a member of a portable electronic device such as a tablet PC and a wearable terminal, and a protective protector, a member of a substrate for a head-up display, or the like used in a transport vehicle such as a car and an airplane. The crystallized glass and the reinforced crystallized glass according to the present disclosure may be used for other electronic devices and machinery, a building member, a member for a solar panel, a member for a projector, and a cover glass (windshield) for eyeglasses and a watch, for example.

### DETAILED DESCRIPTION OF THE EXEMPLARY EMBODIMENTS

Embodiments and examples of crystallized glass and reinforced crystallized glass according to the present disclosure will be described below in detail, but the present disclosure is not limited to the following embodiments and examples, and may be implemented with appropriate changes within the scope of the object of the present disclosure.

The crystallized glass according to the present disclosure is crystallized glass containing at least one type selected from α-cristobaliteand an α-cristobalite solid solution as a main crystal phase, in which
by mass% in terms of oxide,
a content of a SiO₂ component is 50.0% to 75.0%,
a content of a Li₂O component is 3.0% to 10.0%,
a content of an Al₂O₃ component is 5.0% or more and less than 15.0%, and
a content of a B₂O₃ component is more than 0% and 10.0% or less.

By providing such a main crystal phase and composition, the glass transition temperature is lowered, the meltability of the raw material is improved, which facilitates production, and the obtained crystallized glass is easily processed by 3D processing or the like. Further, by strengthening the crystallized glass, it is possible to obtain a reinforced crystallized glass having a high compressive stress value in a compressive stress layer formed on a surface.

Tg is preferably 610°C or lower, more preferably 600°C or lower, and still more preferably 590°C or lower.

The crystallized glass according to the present disclosure contains at least one type selected from α-cristobalite and an α-cristobalite solid solution as a main crystal phase. The crystallized glass in which these crystal phases are precipitated has high mechanical strength.

The term "main crystal phase" as used herein corresponds to a crystal phase contained in the largest amount in the crystallized glass, as determined from a peak of an X-ray diffraction pattern.

As used herein, contents of each component are all expressed by mass% in terms of oxide unless otherwise specified. Here, "in terms of oxide" means, if it is assumed that all constituent components included in the crystallized glass are dissolved and converted into oxides and a total mass of the oxides is 100 mass%, an amount of oxides in each of the components contained in the crystallized glass is expressed by mass%. As used herein, "A% to B%" represents A% or more and B% or less.

The SiO₂ component is an essential component necessary for constituting one or more types selected from α-cristobalite and an α-cristobalite solid solution. If the content of the SiO₂ component exceeds 75.0%, there may be an excessive increase in viscosity and deterioration of meltability. If the content of the SiO₂ component is less than 50.0%, the devitrification resistance may deteriorate.

Preferably, an upper limit of the content of the SiO₂ component is 75.0% or less, 74.0% or less, 73.0% or less, 72.0% or less, or 70.0% or less. Preferably, a lower limit of the content of the SiO₂ component is 50.0% or more, 55.0% or more, 58.0% or more, or 60.0% or more.

The Li₂O component is a component for improving the meltability of raw glass. However, if the amount of the Li₂O component is less than 3.0%, it is not possible to obtain the above-described effect and thus, it may be difficult to melt the raw glass. If the content of the Li₂O component exceeds 10.0%, an amount of lithium disilicate crystals being produced may increase. The Li₂O component is a component contributing to chemical strengthening.

A lower limit of the Li₂O component is preferably 3.0% or more, 3.5% or more, 4.0% or more, 4.5% or more, 5.0% or more, or 5.5% or more. An upper limit of the Li₂O component is preferably 10.0% or less, 9.0% or less, 8.5% or less, or 8.0% or less.

The Al₂O₃ component is a component suitable for improving the mechanical strength of crystallized glass. If the content of the Al₂O₃ component is 15.0% or more, the meltability and the devitrification resistance may easily deteriorate, and if the content is less than 5.0%, the effect of improving the mechanical strength may be poor.

Preferably, an upper limit of the content of the Al₂O₃ component is less than 15.0%, 14.5% or less, 14.0% or less, 13.5% or less, or 13.0% or less. A lower limit of the content of the Al₂O₃ component may be 5.0% or more, 5.5% or more, 5.8% or more, 6.0% or more, 6.5% or more, or 8.0% or more.

The B₂O₃ component is a component suitable for lowering the glass transition temperature of crystallized glass, but if the amount of the B₂O₃ component exceeds 10.0%, the chemical durability tends to decrease.

Preferably, an upper limit of the content of the B₂O₃ component is 10.0% or less, 8.0% or less, 7.0% or less, 5.0% or less, or 4.0% or less. A lower limit of the content of the B₂O₃ component is more than 0%, 0.001 % or more, 0.01% or more, 0.05% or more, 0.10% or more, or 0.30% or more.

The ZrO₂ component is a component that can improve the mechanical strength. However, if the amount of the ZrO₂ component exceeds 10.0%, the meltability may deteriorate.

Preferably, an upper limit of the content of the ZrO₂ component is 10.0% or less, 9.0% or less, 8.5% or less, or 8.0% or less. A lower limit of the content of the ZrO₂ component may be more than 0%, 1.0% or more, 1.5% or more, or 2.0% or more.

If the sum of the contents of the Al₂O₃ component and the ZrO₂ component, that is, [Al₂O₃ + ZrO₂], is large, the compressive stress on the surface increases when strengthening is performed. Preferably, a lower limit of [Al₂O₃ + ZrO₂] is 10.0% or more, 11.0% or more, 12.0% or more, or 13.0% or more.

On the other hand, if the content of [Al₂O₃ + ZrO₂] is too large, the meltability may easily deteriorate. Therefore, an upper limit of [Al₂O₃ + ZrO₂] is preferably 22.0% or less, 21.0% or less, 20.0% or less, or 19.0% or less.

A lower limit of the total content of the SiO₂ component, the Li₂O component, the Al₂O₃ component, and the B₂O₃ component may preferably be 75.0% or more, 80.0% or more, 83.0% or more, or 85.0% or more.

A P₂O₅ component is an optional component that can be added to act as a crystal nucleating agent for the glass. However, if the amount of the P₂O₅ component exceeds 10.0%, the devitrification resistance is likely to deteriorate and phase separation may easily occur in the glass.

An upper limit of the P₂O₅ component is preferably 10.0% or less, 8.0% or less, 6.0% or less, 5.0% or less, or 4.0% or less. A lower limit of the content of the P₂O₅ component may be 0% or more, 0.5% or more, 1.0% or more, or 1.5% or more.

A K₂O component is an optional component contributing to chemical strengthening. Preferably, a lower limit of the K₂O component may be 0% or more, 0.1% or more, 0.3% or more, or 0.5% or more.

If the content of the K₂O component is too large, it may be difficult to precipitate crystals. Thus, an upper limit of the K₂O component may preferably be 5.0% or less, 4.0% or less, 3.5% or less, or 3.0% or less.

The Na₂O component is an optional component involved in chemical strengthening. If the content of the Na₂O component is too large, it may be difficult to obtain a desired crystal phase. Preferably, an upper limit of the content of the Na₂O component may be 4.0% or less, or 3.5% or less, more preferably 3.0% or less, and still more preferably 2.5% or less.

An MgO component, a CaO component, a SrO component, a BaO component, and a ZnO component are optional components that improve the meltability at low temperatures, and may be contained within a range that does not impair the effects of the present disclosure. Therefore, an upper limit of the MgO component may preferably be 4.0% or less, 3.5% or less, 3.0% or less, or 2.5% or less. Preferably, a lower limit of the MgO component may be 0% or more, more than 0%, 0.3% or more, or 0.4% or more. Preferably, an upper limit of the CaO component may be 4.0% or less, 3.0% or less, 2.5% or less, or 2.0% or less. Preferably, an upper limit of the SrO component may be 4.0% or less, 3.0% or less, 2.5% or less, or 2.0% or less. Preferably, an upper limit of the BaO component may be 5.0% or less, 4.0% or less, 3.0% or less, 2.5% or less, or 2.0% or less. Preferably, an upper limit of the ZnO component may be 10.0% or less, 9.0% or less, 8.5% or less, 8.0% or less, or 7.5% or less. Preferably, a lower limit of the ZnO component may be 0% or more, more than 0%, 0.5% or more, or 1.0% or more.

As long as the effect of the present disclosure is not impaired, the crystallized glass may or may not contain each of an Nb₂O₅ component, a Ta₂O₅ component, and a TiO₂ component. The Nb₂O₅ component is an optional component that improves the mechanical strength of the crystallized glass, if the content of the Nb₂O₅ component exceeds 0%. Preferably, an upper limit of the Nb₂O₅ component may be 5.0% or less, 4.0% or less, 3.5% or less, or 3.0% or less. The Ta₂O₅ component is an optional component that improves the mechanical strength of the crystallized glass, if the content of the Ta₂O₅ component exceeds 0%. Preferably, ab upper limit of the Ta₂O₅ component is 6.0% or less, 5.5% or less, 5.0% or less, or 4.0% or less. The TiO₂ component is an optional component that improves the chemical durability of the crystallized glass, if the content of the TiO₂ component exceeds 0%. Preferably, an upper limit of the TiO₂ component may be less than 1.0%, 0.8% or less, 0.5% or less, or 0.1% or less.

As long as the effect of the present disclosure is not impaired, the crystallized glass may or may not contain each of a La₂O₃ component, a Gd₂O₃ component, an Y₂O₃ component, a WO₃ component, a TeO₂ component, and a Bi₂O₃ component. The blending amount of each of the components may be 0% to 2.0%, 0% to less than 2.0%, or 0% to 1.0%.

As long as the characteristics of the crystallized glass according to the present disclosure are not impaired, the crystallized glass may or may not contain other components not described above. Examples of the other components include metal components such as Yb, Lu, V, Cr, Mn, Fe, Co, Ni, Cu, Ag, and Mo (including metal oxides thereof).

An Sb₂O₃ component may be contained as a glass clarifying agent. On the other hand, if the content of the Sb₂O₃ component is too large, the transmittance in the short wavelength region of the visible light region may deteriorate. Therefore, an upper limit of the content of the Sb₂O₃ component is preferably 3.0% or less, more preferably 2.0% or less, still more preferably 1.0% or less, and yet still more preferably 0.6% or less.

In addition to the Sb₂O₃ component, the crystallized glass may or may not contain a SnO₂ component, a CeO₂ component, an As₂O₃ component, and one or more types selected from the group consisting of F, NOx, and SOx as the glass clarifying agent. It is noted that an upper limit of the content of the clarifying agent may be preferably 2.0% or less, more preferably 1.0% or less, and most preferably 0.6% or less.

On the other hand, there is a tendency to refrain from using each component of Pb, Th, Tl, Os, Be, Cl, and Se, which are considered in recent years as harmful chemical substances, and thus, it is preferable that these components are substantially not contained.

A compressive stress layer may be formed on a surface of the crystallized glass according to the present disclosure. A compressive stress CS (MPa) of the compressive stress layer is preferably 650 MPa or more, more preferably 680 MPa or more, and still more preferably 700 MPa or more. For example, an upper limit of the compressive stress CS is 1400 MPa or less, 1300 MPa or less, 1200 MPa or less, or 1100 MPa or less. If the compressive stress layer has such a compressive stress value, it is possible to suppress the growth of cracks and increase the mechanical strength.

A thickness DOLzero (µm) of the compressive stress layer is not limited because the thickness depends on the thickness of the crystallized glass. For example, in a case of a crystallized glass substrate having a thickness of 0.70 mm, a lower limit of the thickness of the compressive stress layer may be 70 µm or more or 100 µm or more. An upper limit of the thickness of the compressive stress layer is, for example, 180 µm or less, or 150 µm or less.

When the crystallized glass is a substrate, a lower limit of a thickness of the substrate is preferably 0.10 mm or more, more preferably 0.30 mm or more, still more preferably 0.40 mm or more, yet still more preferably 0.50 mm or more, and an upper limit of the thickness of the crystallized glass is preferably 2.00 mm or less, more preferably 1.50 mm or less, still more preferably 1.10 mm or less, yet still more preferably 1.00 mm or less, even more preferably 0.90 mm or less, and yet even more preferably 0.80 mm or less.

The crystallized glass may be manufactured by the following method. That is, raw materials are uniformly mixed so that the components satisfy a predetermined content range, and melted and shaped to produce raw glass. Next, the raw glass is crystallized to manufacture crystallized glass.

The raw glass may be treated by heat for precipitation of crystals at a one-stage temperature or a two-stage temperature.

The two-stage heat treatment includes a nucleation step of firstly treating the raw glass by heat at a first temperature and a crystal growth step of treating, after the nucleation step, the glass by heat at a second temperature higher than that in the nucleation step.

The first temperature in the two-stage heat treatment may preferably be 450°C to 750°C, more preferably 500°C to 720°C, and still more preferably 550°C to 680°C. A retention time at the first temperature is preferably 30 minutes to 2000 minutes, and more preferably 180 minutes to 1440 minutes.

The second temperature in the two-stage heat treatment may be preferably 550°C to 850°C, and more preferably 600°C to 800°C. A retention time at the second temperature is preferably 30 minutes to 600 minutes, and more preferably 60 minutes to 400 minutes.

In the one-stage heat treatment, the nucleation step and the crystal growth step are continuously performed at the one-stage temperature. Typically, the temperature is raised to a predetermined heat treatment temperature, is maintained for a certain period of time after reaching the predetermined heat treatment temperature, and is then lowered.

In the one-stage heat treatment, the heat treatment temperature is preferably 600°C to 800°C, and more preferably 630°C to 770°C. A retention time at the heat treatment temperature is preferably 30 minutes to 500 minutes, and more preferably 60 minutes to 400 minutes.

An example of a method for forming the compressive stress layer in the reinforced crystallized glass includes a chemical strengthening method in which an alkaline component present in a surface layer of the crystallized glass is subject to an exchange reaction with an alkaline component having a larger ionic radius to form a compressive stress layer on the surface layer. Other examples include a heat strengthening method in which the crystallized glass is heated and subsequently quenched, and an ion implantation method in which ions are implanted into the surface layer of the crystallized glass.

The chemical strengthening method may be implemented by the following steps, for example. A crystallized glass is contacted with or immersed in a molten salt of a salt containing potassium or sodium, for example, potassium nitrate (KNO₃), sodium nitrate (NaNO₃) or a mixed salt or a composite salt thereof. The treatment of contacting or immersing the crystallized glass with or into the molten salt (chemical strengthening treatment) may be performed in one stage or in two stages.

For example, in the case of the two-stage chemical strengthening treatment, firstly, during 1 to 1440 minutes, preferably 30 to 500 minutes, the crystallized glass is contacted with or immersed in a sodium salt or a mixed salt of potassium and sodium heated at 350°C to 550°C. Subsequently, secondly, during 1 to 1440 minutes, preferably 60 to 600 minutes, the resultant crystallized glass is contacted with or immersed in a potassium salt or a mixed salt of potassium and sodium heated at 350°C to 550°C.

In the case of the one-stage chemical strengthening treatment, the crystallized glass is contacted with or immersed in a salt containing potassium or sodium heated at 350°C to 550°C or a mixed salt thereof for 1 to 1440 minutes.

The chemical strengthening of the crystallized glass according to the present disclosure may be performed in one stage or in multiple stages. However, in order to efficiently increase the surface compressive stress and increase the thickness of the compressive stress layer, it is preferable to perform the two-stage strengthening treatment in which the crystallized glass is first strengthened by using a molten salt of sodium alone or a mixture of sodium and potassium, and then, the resultant crystallized glass is secondly strengthened by using a molten salt of potassium alone.

The heat strengthening method is not particularly limited. For example, the crystallized glass may be heated to 300°C to 600°C, and then, be subjected to rapid cooling such as water cooling and/or air cooling to form the compressive stress layer by a temperature difference between the surface and the inside of the glass. When the heat strengthening method is combined with the above-described chemical treatment method, it is possible to more effectively form the compressive stress layer.

The ion implantation method is not particularly limited. For example, any type of ion may be caused to collide with the surface of the crystallized glass with an acceleration energy and an acceleration voltage that do not destroy the surface to implant the ions into the surface. Thereafter, by performing heat treatment as necessary, it is possible to form the compressive stress layer on the surface in a similar manner as in the other methods.

### EXAMPLES

Examples 1 to 25, Reference Example 1, Comparative Examples 1 and 2

Raw materials such as oxides, hydroxides, carbonates, nitrates, fluorides, chlorides, and metaphosphate compounds corresponding to a raw material of each component of the crystallized glass were selected, and the selected raw materials were weighed and mixed uniformly to obtain the compositions described in Tables 1 to 4.

Next, the mixed raw materials were injected into a platinum crucible and melted in an electric furnace at 1300°C to 1600°C for 2 to 24 hours depending on the difficulty of melting the glass composition. Subsequently, the molten glass was homogenized by stirring, and cooled to 1000°C to 1450°C. Then, the molten glass was cast into a mold and cooled slowly to prepare raw glass. The obtained raw glass was heated under the crystallization conditions described in Tables 1 to 4 to prepare crystallized glass.

Crystal phases of the crystallized glass were determined from an angle of a peak appearing in an X-ray diffraction pattern obtained by using an X-ray diffraction analyzer (D8 Discover manufactured by Bruker). When the X-ray diffraction patterns of the crystallized glasses of Examples 1 to 25, Reference Example 1, and Comparative Examples 1 and 2 were observed, all the main peaks (peaks with the highest intensity and the largest peak area) were observed at positions corresponding to the peak pattern of α-cristobalite and/or an α-cristobalite solid solution. Therefore, it was determined that the α-cristobalite and the α-cristobalite solid solution were precipitated as the main crystal phase in all glasses.

The glass transition temperatures (Tg) of the crystallized glasses of Examples 1 to 25, Comparative Examples 1 and 2, and Reference Example 1 were measured according to the Japan Optical Glass Industry Standard JOGIS08-2019 "Measuring Method for Thermal Expansion of Optical Glass". The results are shown in Tables 1 to 4. It can be seen from Tables 1 to 4 that the crystallized glass in the Examples has a lower Tg than that in the Reference Example.

In Examples 2 to 4, 6 to 12, and Comparative Examples 1 and 2, the manufactured crystallized glass was cut and ground, and opposing sides of the resultant crystallized glass were further polished in parallel to achieve the material thickness described in Table 5 to obtain a crystallized glass substrate. In the Examples, the crystallized glass substrate serving as a base material was subjected to the two-stage strengthening to obtain a chemically strengthened crystallized glass substrate. Specifically, the crystallized glass substrate was immersed in the NaNO₃ molten salt at the temperatures and for the time periods shown in Table 5 (first stage), and then, the resultant crystallized glass substrate was immersed in the KNO₃ molten salt at the temperatures and for the time periods shown in Table 5 (second stage).

The substrates obtained in Comparative Examples 1 and 2 were subjected to the one-stage strengthening through immersion in the KNO₃ molten salt at the temperatures and for the time periods shown in Table 5. Comparative Examples 1 and 2 are chemically strengthened crystallized glass substrates corresponding to Examples 25 and 27 described in Patent Document 1.

The compressive stress value (CS) on the outermost surface was measured by using a glass surface stress meter FSM-6000LE series manufactured by Orihara Manufacturing Co., LTD. A light source having a wavelength of 596 nm was used as the light source of the measuring instrument.

As the refractive index used in the CS measurement, a value of the refractive index at 596 nm was used. It is noted that the value of the refractive index was calculated by using a quadratic approximation expression from the measured values of the refractive index at the wavelengths of a C-line, a d-line, an F-line, and a g-line according to the V-block method specified in JIS B 7071-2: 2018.

As a photoelastic constant used for the CS measurement, the value of a photoelastic constant at 596 nm was used. The photoelastic constant may be calculated from the measured values of the photoelastic constants at a wavelength of 435.8 nm, a wavelength of 546.1 nm, and a wavelength of 643.9 nm by using a quadratic approximation expression. In the Examples, a photoelastic constant of 29.6 was used as a representative value.

The photoelastic constant (β) was determined by polishing opposing sides of a sample shape to form a disk having a diameter of 25 mm and a thickness of 8 mm, applying a compressive load to the disk in a predetermined direction, measuring an optical path difference occurring in a center of the glass, and using the relational expression δ = β^{∗}d^{∗}F. In the relational expression, δ (nm) denotes the optical path difference, d (mm) denotes the glass thickness, and F (MPa) denotes the stress.

A depth DOLzero (µm) when the compressive stress of the compressive stress layer is 0 MPa was measured by using a scattered light photoelastic stress meter SLP-1000. A light source having a wavelength of 640 nm was used as a measurement light source.

A refractive index value at a wavelength of 640 nm was calculated by using a quadratic approximation expression from the measured values of the refractive index at the wavelengths of the C-line, the d-line, the F-line, and the g-line according to the V-block method specified in JIS B 7071-2:2018.

The photoelastic constant at a wavelength of 640 nm used in the measurement of DOLzero can be calculated by using a quadratic approximation expression from the measured values of the photoelastic constants at a wavelength of 435.8 nm, a wavelength of 546.1 nm, and a wavelength of 643.9 nm. In the Examples, 29.2 was used as a representative value of the photoelastic constant.

In Comparative Examples 1 and 2, measurement was performed by the same method as in Comparative Examples 1 and 2 of PCT/JP2020/9459.

The results are shown in Table 5. From Table 5, it is seen that the reinforced crystallized glass according to the present disclosure includes a deep compressive stress layer having a high CS on the surface, and thus, the strength is high.

**Table 1**

| Examples | | | 1 | 2 | 3 | 4 | 5 | 6 | 7 | 8 |
|---|---|---|---|---|---|---|---|---|---|---|
| Composition [mass%] | SiO₂ | | 64.36 | 64.86 | 64.20 | 64.86 | 64.20 | 64.86 | 64.86 | 64.86 |
| | Al₂O₃ | | 12.44 | 12.44 | 12.10 | 12.44 | 12.40 | 12.44 | 12.64 | 12.44 |
| | B₂O₃ | | 0.50 | 1.00 | 0.50 | 1.00 | 1.00 | 1.00 | 1.00 | 2.00 |
| | P₂O₅ | | 2.04 | 2.04 | 2.60 | 2.04 | 2.60 | 2.04 | 2.04 | 2.04 |
| | Li₂O | | 7.14 | 7.14 | 6.97 | 7.14 | 6.97 | 7.14 | 7.14 | 7.14 |
| | Na₂O | | | | | | | | | |
| | K₂O | | 1.53 | 1.53 | 1.50 | 1.53 | 1.50 | 1.53 | 1.33 | 1.53 |
| | MgO | | 1.02 | 1.02 | 1.70 | 2.02 | 0.60 | 0.52 | 1.02 | 1.02 |
| | CaO | | 0.41 | 0.41 | 0.65 | 0.41 | 0.55 | 0.91 | 0.41 | 0.41 |
| | SrO | | | | | | | | | |
| | BaO | | | | | | | | | |
| | ZnO | | 4.88 | 3.88 | 4.10 | 2.88 | 4.50 | 3.88 | 3.88 | 2.88 |
| | ZrO₂ | | 5.60 | 5.60 | 5.60 | 5.60 | 5.60 | 5.60 | 5.60 | 5.60 |
| | Nb₂O₅ | | | | | | | | | |
| | Ta₂O₅ | | | | | | | | | |
| | TiO₂ | | | | | | | | | |
| | Sb₂O₃ | | 0.08 | 0.08 | 0.08 | 0.08 | 0.08 | 0.08 | 0.08 | 0.08 |
| | Total | | 100.00 | 100.00 | 100.00 | 100.00 | 100.00 | 100.00 | 100.00 | 100.00 |
| | Al₂O₃ + ZrO₂ | | 18.04 | 18.04 | 17.70 | 18.04 | 18.00 | 18.04 | 18.24 | 18.04 |
| Crystallization Conditions | Nucleation | Temperature [°C] | 600 | 600 | 600 | 600 | 600 | 600 | 600 | 600 |
| | | Retention time [h] | 5 | 5 | 5 | 5 | 5 | 5 | 5 | 5 |
| | Crystal growth | Temperature [°C] | 700 | 680 | 660 | 660 | 700 | 660 | 660 | 660 |
| | | Retention time [h] | 5 | 5 | 5 | 5 | 5 | 5 | 5 | 5 |
| Tg [°C] | | | 600 | 589 | 592 | 577 | 595 | 592 | 593 | 576 |

**[Table 2]**

| Examples | | | 9 | 10 | 11 | 12 | 13 | 14 | 15 | 16 |
|---|---|---|---|---|---|---|---|---|---|---|
| Composition [mass%] | SiO₂ | | 64.86 | 64.86 | 64.86 | 64.86 | 64.86 | 60.00 | 71.42 | 67.20 |
| | Al₂O₃ | | 12.44 | 12.44 | 12.74 | 12.44 | 12.44 | 12.10 | 5.70 | 5.60 |
| | B₂O₃ | | 3.00 | 2.00 | 2.00 | 2.00 | 2.00 | 3.00 | 2.00 | 1.15 |
| | P₂O₅ | | 2.04 | 2.04 | 2.04 | 2.04 | 2.04 | 3.80 | 2.30 | 2.60 |
| | Li₂O | | 7.14 | 7.14 | 7.14 | 7.64 | 7.14 | 6.97 | 7.50 | 5.97 |
| | Na₂O | | | | | | | 1.00 | | 2.00 |
| | K₂O | | 1.53 | 1.53 | 1.23 | 1.03 | 1.53 | 0.50 | 1.50 | 1.50 |
| | MgO | | 1.02 | 0.52 | 1.02 | 1.02 | 1.02 | 1.10 | 0.50 | 2.20 |
| | CaO | | 0.41 | 0.41 | 0.41 | 0.41 | | | | |
| | SrO | | | | | | | | | |
| | BaO | | | | | | | 1.25 | | |
| | ZnO | | 1.88 | 3.38 | 2.88 | 2.88 | 2.88 | 4.60 | 3.50 | 5.10 |
| | ZrO₂ | | 5.60 | 5.60 | 5.60 | 5.60 | 6.01 | 5.60 | 5.50 | 5.60 |
| | Nb₂O₅ | | | | | | | | | |
| | Ta₂O₅ | | | | | | | | | |
| | TiO₂ | | | | | | | | | |
| | Sb₂O₃ | | 0.08 | 0.08 | 0.08 | 0.08 | 0.08 | 0.08 | 0.08 | 1.08 |
| | Total | | 100.0 0 | 100.0 0 | 100.0 0 | 100.0 0 | 100.0 0 | 100.0 0 | 100.0 0 | 100.0 0 |
| | Al₂O₃ + ZrO₂ | | 18.04 | 18.04 | 18.34 | 18.04 | 18.45 | 17.70 | 11.20 | 11.20 |
| Crystallization Conditions | Nucleation | Temperature [°C] | 600 | 600 | 600 | 600 | 600 | 600 | 600 | 600 |
| | | Retention time [h] | 5 | 5 | 5 | 5 | 5 | 5 | 5 | 5 |
| | Crystal growth | Temperature [°C] | 660 | 680 | 660 | 660 | 700 | 680 | 680 | 670 |
| | | Retention time [h] | 5 | 5 | 5 | 5 | 5 | 5 | 5 | 5 |
| Tg [°C] | | | 561 | 573 | 577 | 570 | 575 | 586 | - | 574 |

**[Table 3]**

| Examples | | | 17 | 18 | 19 | 20 | 21 | 22 | 23 | 24 |
|---|---|---|---|---|---|---|---|---|---|---|
| Composition [mass%] | SiO₂ | | 65.68 | 64.20 | 65.86 | 64.86 | 66.36 | 64.86 | 65.81 | 65.81 |
| | Al₂O₃ | | 9.44 | 10.10 | 6.24 | 12.74 | 12.74 | 10.74 | 10.72 | 10.72 |
| | B₂O₃ | | 7.00 | 1.50 | 4.00 | 3.00 | 2.00 | 2.00 | 2.00 | 2.00 |
| | P₂O₅ | | 2.04 | 4.85 | 2.25 | 2.04 | 2.54 | 2.04 | 2.14 | 2.14 |
| | Li₂O | | 7.14 | 6.97 | 8.14 | 7.14 | 7.14 | 7.14 | 7.13 | 7.13 |
| | Na₂O | | | | | | | | 0.50 | 0.50 |
| | K₂O | | 1.53 | 1.50 | 1.73 | | 2.23 | 1.23 | 0.73 | 0.73 |
| | MgO | | 0.41 | 1.10 | 1.02 | 2.02 | 1.02 | 1.02 | 1.02 | 1.02 |
| | CaO | | | 1.00 | | 0.41 | 0.41 | 0.41 | 0.41 | |
| | SrC | | | | | | | | | |
| | BaO | | | | | | | | | |
| | ZnO | | 1.08 | 3.10 | 2.88 | 3.11 | 2.88 | 1.88 | 2.88 | 2.88 |
| | ZrO₂ | | 5.60 | 5.00 | 7.60 | 4.60 | 2.30 | 8.68 | 5.60 | 5.60 |
| | Nb₂O₅ | | | | | | | | 1.00 | |
| | Ta₂O₅ | | | | | | | | | 1.41 |
| | TiO₂ | | | | | | | | | |
| | Sb₂O₃ | | 0.08 | 0.68 | 0.28 | 0.08 | 0.38 | | 0.06 | 0.06 |
| | Total | | 100.00 | 100.00 | 100.00 | 100.00 | 100.00 | 100.00 | 100.00 | 100.00 |
| | Al₂O₃ + ZrO₂ | | 15.04 | 15.10 | 13.84 | 17.34 | 15.04 | 19.42 | 16.32 | 16.32 |
| Crystallization Conditions | Nucleation | Temperature [°C] | 600 | 600 | 600 | 600 | 600 | 600 | 600 | 600 |
| | | Retention time [h] | 5 | 5 | 5 | 5 | 5 | 5 | 5 | 5 |
| | Crystal growth | Temperature [°C] | 640 | 670 | 640 | 640 | 660 | 680 | 660 | 660 |
| | | Retention time [h] | 5 | 5 | 5 | 5 | 5 | 5 | 5 | 5 |
| Tg [°C] | | | 536 | 580 | 545 | 541 | 569 | 531 | 572 | 578 |

**[Table 4]**

| Examples | | 25 | Reference Example 1 | Comparative Example 1 | Comparative Example 2 | |
|---|---|---|---|---|---|---|
| | SiO₂ | 64.81 | 65.66 | 67.30 | 69.50 | |
| | Al₂O₃ | 12.72 | 12.44 | 7.40 | 7.00 | |
| | B₂O₃ | 2.00 | | | | |
| Composition [mass%] | P₂O₅ | | 2.14 | 2.04 | 2.00 | 2.20 |
| | Li₂O | | 7.13 | 7.14 | 6.20 | 7.00 |
| | Na₂O | | 0.50 | | | |
| | K₂O | | 0.73 | 1.53 | 2.00 | 2.00 |
| | MgO | | 1.02 | 1.02 | 2.00 | 1.70 |
| | CaO | | 0.41 | 0.41 | | |
| | SrO | | | | 1.70 | 1.00 |
| | BaO | | | | 2.50 | 1.60 |
| | ZnO | | 2.88 | 4.08 | 6.00 | 2.80 |
| | ZrO₂ | | 5.60 | 5.60 | 2.40 | 2.00 |
| | Nb₂O₅ | | | | | |
| | Ta₂O₅ | | | | | |
| | TiO₂ | | | | | 3.00 |
| | Sb₂O₃ | | 0.06 | 0.08 | 0.50 | 0.20 |
| | Total | | 100.00 | 100.00 | 100.00 | 100.00 |
| | Al₂O₃ + ZrO₂ | | 18.32 | 18.04 | 9.80 | 9.00 |
| Crystallization Conditions | Nucleation | Temperature [°C] | 600 | 600 | 600 | 600 |
| | | Retention time [h] | 5 | 5 | 5 | 5 |
| | Crystal growth | Temperature [°C] | 660 | 700 | 690 | 670 |
| | | Retention time [h] | 5 | 5 | 5 | 5 |
| Tg [°C] | | | 579 | 616 | 583 | 554 |

**[Table 5]**

| Examples | | | 2 | 3 | 4 | 6 | 7 | 8 | 9 | 10 | 11 | 12 | Comparative Example 1 | Comparative Example 2 |
|---|---|---|---|---|---|---|---|---|---|---|---|---|---|---|
| Chemical Strengthen ing Conditions | First stage | Salt bath (K:Na) | Na single bath | Na single bath | Na single bath | Na single bath | Na single bath | Na single bath | Na single bath | Na single bath | Na single bath | Na single bath | | |
| | | Temperature [°C] | 400 | 400 | 400 | 400 | 400 | 400 | 400 | 400 | 400 | 400 | - | - |
| | | Time [min] | 60 | 60 | 60 | 60 | 60 | 60 | 60 | 60 | 60 | 60 | - | - |
| | Second stage | Salt bath | K single bath | K single bath | K single bath | K single bath | K single bath | K single bath | K single bath | K single bath | K single bath | K single bath | K single bath | K single bath |
| | | Temperature [°C] | 370 | 370 | 370 | 370 | 370 | 370 | 370 | 370 | 370 | 370 | 450 | 450 |
| | | Time [min] | 200 | 200 | 200 | 200 | 200 | 200 | 200 | 200 | 200 | 200 | 720 | 720 |
| Material thickness [mm] | | | 0.76 | 0.77 | 0.77 | 0.77 | 0.77 | 0.77 | 0.77 | 0.74 | 0.74 | 0.73 | 10 | 10 |
| Stress | CS (MPa] | | 875.7 | 938.9 | 918.0 | 925.9 | 937.0 | 923.4 | 888.7 | 901.6 | 913.7 | 933.2 | 573 | 529 |
| | DOLzero [µm] | | 133.5 | 129.0 | 123.5 | 125.1 | 126.9 | 119.3 | 115.4 | 118.9 | 128.6 | 123.2 | 24 | 26 |

## Claims

1. Crystallized glass containing at least one type selected from α-cristobalite and an α-cristobalite solid solution as a main crystal phase, wherein
by mass% in terms of oxide,
a content of a SiO₂ component is 50.0% to 75.0%,
a content of a Li₂O component is 3.0% to 10.0%,
a content of an Al₂O₃ component is 5.0% or more and less than 15.0%, and
a content of a B₂O₃ component is more than 0% and 10.0% or less.

2. The crystallized glass according to claim 1, wherein, by mass% in terms of oxide,
a content of a ZrO₂ component is more than 0% and 10.0% or less, and
a total content of the Al₂O₃ component and the ZrO₂ component is 10.0% or more.

3. The crystallized glass according to claim 1 or 2, wherein,
by mass% in terms of oxide,
a content of a K₂O component is 0% to 5.0%, and
a content of a P₂O₅ component is 0% to 10.0%.

4. The crystallized glass according to any one of claims 1 to 3, wherein,
by mass% in terms of oxide,
a content of a Na₂O component is 0% to 4.0%,
a content of a MgO component is 0% to 4.0%,
a content of a CaO component is 0% to 4.0%,
a content of a SrO component is 0% to 4.0%,
a content of a BaO component is 0% to 5.0%,
a content of a ZnO component is 0% to 10.0%, and
a content of an Sb₂O₃ component is 0% to 3.0%.

5. The crystallized glass according to any one of claims 1 to 4, wherein,
by mass% in terms of oxide,
a content of a Nb₂O₅ component is 0% to 5.0%,
a content of a Ta₂O₅ component is 0% to 6.0%, and
a content of a TiO₂ component is 0% or more and less than 1.0%.

6. The crystallized glass according to any one of claims 1 to 5, having a glass transition temperature (Tg) of 610°C or lower.

7. Reinforced crystallized glass obtained by strengthening the crystallized glass according to any one of claims 1 to 6, the reinforced crystallized glass comprising a compressive stress layer on a surface.
